# EUROPEAN PATENT APPLICATION

(11) **EP 4 518 008 A1**
(43) Date of publication of application: **05.03.2025**
(21) Application number: 23869432.7
(22) Date of filing: 17.02.2023
(51) Int. Cl.: H01M 50/543, H01M 50/176, H01M 50/15

(54) **BATTERY CELL, BATTERY, AND ELECTRIC DEVICE**

(30) Priority: 28.09.2022 CN 202222587887 U
(71) Applicant: Contemporary Amperex Technology (Hong Kong) Limited, Central, Central And Western District (HK)
(72) Inventor: KE, Haibo, Ningde, Fujian 352100 (CN); LI, Quankun, Ningde, Fujian 352100 (CN); MAO, Guoan, Ningde, Fujian 352100 (CN); HUANG, Shoujun, Ningde, Fujian 352100 (CN); MEI, Xiang, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2023/076799
(87) International publication number: WO 2024/066169

(57) **Abstract**

This application provides a battery cell, a battery, and an electric apparatus. The battery cell includes a housing, an electrode terminal, and a current collector. The housing has a first wall and an accommodating cavity. The first wall has a first through hole enabling communication between the accommodating cavity and the outside of the housing. The electrode terminal includes a base and a connection portion connected to the base. The base is located on a side of the first wall back away from the accommodating cavity. At least part of the connection portion is located in the first through hole. The current collector includes a body portion and a protruding portion connected to the body portion. The protruding portion protrudes towards the first wall, and the protruding portion is configured to be connected to the connection portion. The battery cell provided by this application is conducive to reducing the protrusion height of the protruding portion of the current collector relative to the body portion, and to enhancing the structural strength of the protruding portion as well as the connection reliability between the protruding portion and the electrode terminal, thereby enhancing the safety performance of the battery cell.

## Description

### CROSS-REFERENCE TO RELATED APPLICATIONS

This application claims priority to Chinese Patent Application No. 202222587887.1, filed on September 28, 2022 and entitled "BATTERY CELL, BATTERY, AND ELECTRIC APPARATUS", which is incorporated herein by reference in its entirety.

### TECHNICAL FIELD

This application relates to the field of battery technologies, and in particular, to a battery cell, a battery, and an electric apparatus.

### BACKGROUND

Batteries are widely used in electronic devices such as mobile phones, laptops, battery carts, electric vehicles, electric aircrafts, electric ships, electric toy cars, electric toy ships, electric toy aircrafts, and electric tools. Battery cells may include nickel-cadmium battery cells, nickel-hydrogen battery cells, lithium-ion battery cells, secondary alkaline zinc-manganese battery cells, and the like.

In the development of battery cell technologies, in addition to the use performance of the battery cell, how to improve the safety performance of the battery cell is also an issue that cannot be ignored. Therefore, how to improve the safety performance of the battery cell is a technical problem to be resolved continuously in battery cell technologies.

### SUMMARY

This application provides a battery cell, a battery, and an electric apparatus, which can improve the safety performance of the battery cell.

According to a first aspect, the battery cell provided in the embodiments of this application includes a housing, an electrode terminal, and a current collector. The housing has a first wall and an accommodating cavity. The first wall has a first through hole enabling communication between the accommodating cavity and the outside of the housing. The electrode terminal includes a base and a connection portion connected to the base. The base is located on a side of the first wall back away from the accommodating cavity. At least part of the connection portion is located in the first through hole. The current collector includes a body portion and a protruding portion connected to the body portion. The protruding portion protrudes towards the first wall, and the protruding portion is configured to be connected to the connection portion.

According to the battery cell provided in the embodiments of this application, at least part of the connection portion of the electrode terminal is disposed in the first through hole, which is conducive to reducing the protrusion height of the protruding portion of the current collector relative to the body portion, thereby enhancing the structural strength of the protruding portion and the connection reliability between the protruding portion and the electrode terminal. Therefore, the battery cell provided by the embodiments of the application is conducive to improving the safety performance of the battery cell.

In some embodiments, the current collector has a groove on a side back away from the first wall, and in a thickness direction of the first wall, the groove corresponds to the protruding portion. Such a setup allows the protruding portion to be formed using a stamping process, which is conducive to simplifying the processing technology of the current collector, and in embodiments where the protruding portion is welded to the connection portion, also to improving the convenience of the welding process between the protruding portion and the connection portion.

In some embodiments, a minimum wall thickness of the protruding portion is δ1, a wall thickness of the body portion is δ, and 0.8≤δ1/δ<1. This is conducive to ensuring the structural strength of the protruding portion, thereby enhancing the connection strength and reliability between the protruding portion and the connection portion.

In some embodiments, the protruding portion protrudes from the body portion by a height h satisfying 0<h≤3 mm. Such arrangement is conducive to ensuring that the ratio of the wall thickness δ1 of the protruding portion to the thickness δ of the body portion satisfies 0.8≤δ1/δ<1, that is, the ratio of the thickness of the protruding portion before stretch to the thickness after stretch is greater than or equal to 0.8. This is conducive to ensuring the structural strength of the protruding portion, thereby enhancing the connection strength and reliability between the protruding portion and the connection portion.

In some embodiments, the battery cell further includes an insulating member. The insulating member is disposed on a side of the first wall facing the accommodating cavity, the insulating member has a second through hole, and in the thickness direction of the first wall, the second through hole is opposite the first through hole. The connection portion has a first connection surface facing the accommodating cavity, the protruding portion has a second connection surface, the first connection surface abuts against the second connection surface, the first connection surface and the second connection surface are located in the first through hole, and/or the first connection surface and the second connection surface are located in the second through hole. Such arrangement allows at least part of the protruding portion to be located in the second through hole. The second through hole can provide a certain limiting function for the protruding portion. When part of the protruding portion is located in the first through hole, the first through hole and the second through hole jointly provide a limiting function for the protruding portion, limiting the displacement of the protruding portion relative to the insulating member and the first wall in a direction perpendicular to the thickness direction. This, in embodiments where the protruding portion is welded to the connection portion, more facilitates connection between the protruding portion and the connection portion.

In some embodiments, in a direction perpendicular to the thickness direction, a size of the first connection surface is greater than a size of the second connection surface. This facilitates the connection between the protruding portion and the connection portion. In a case that on the side of the protruding portion back away from the connection portion, the protruding portion is welded to the connection portion, the connection portion can provide good support for the protruding portion, facilitating the smooth progress of the welding process. The first connection surface being larger than the second connection surface is conducive to increasing the connection area between the first connection surface and the second connection surface, thereby improving the current-carrying capacity of the current collector and the electrode terminal.

In some embodiments, the battery cell further includes a sealing member, the sealing member surrounds the connection portion, and in the thickness direction of the first wall, the sealing member at least partially abuts between the base and first wall. The arrangement of the sealing member is conducive to improving the sealing performance of the accommodating cavity of the battery cell and reducing the risk of electrolyte leakage affecting the normal operation of the battery cell, thereby further improving the safety performance of the battery cell.

In some embodiments, the base has an abutment surface abutting against the sealing member, a distance between the abutment surface and the first connection surface is s1, a distance between the abutment surface and a side of the insulating member facing the accommodating cavity is s, and s1/s≤0.7. This is conducive to ensuring that the size of the part of the protruding portion extending into the first through hole or the second through hole is sufficient to position the protruding portion, further improving the stability and convenience of the connection between the protruding portion and the connection portion.

In some embodiments, a peripheral surface of the connection portion is connected to a surface of the base facing the first wall via a curved surface. This, during the stamping process of the connection portion, is conducive to reducing the risk of metal wires forming at the intersection of the peripheral surface of the connection portion and the surface of the base facing the first wall, thereby increasing the yield rate of the finished electrode terminal.

In some embodiments, a curvature radius R of the curved surface satisfies R≥0.5 mm. This, during the stamping process of the connection portion, is further conducive to reducing the risk of metal wires forming at the intersection of the peripheral surface of the connection portion and the surface of the base facing the first wall, thereby increasing the yield rate of the finished electrode terminal.

In some embodiments, in the direction perpendicular to the thickness direction of the first wall, a gap is present between the sealing member and the connection portion, and in the thickness direction of the first wall, a projection of the curved surface does not overlap a projection of the sealing member. Thus, the curved surface does not press against the sealing member, and the sealing member and the abutment surface are in planar contact, with the consistent force-bearing direction, reducing the risk that the sealing member and the curved surface interfere and lift, leading to a too-small effective sealing area and a sealing failure.

In some embodiments, the connection portion includes a first sub-portion and a second sub-portion connected to each other, the second sub-portion is located on a side of the first sub-portion facing the accommodating cavity, the first sub-portion is connected to the base, and the second sub-portion is connected to the protruding portion. In this way, based on actual situation, under the premise of connecting related structures, the specific materials of the first sub-portion and the second sub-portion are arranged reasonably, to reduce production costs and improve the connection reliability of the related structures.

In some embodiments, a material of the first sub-portion includes aluminum. This is conducive to reducing the weight and production cost of the electrode terminal. The material of the base may include aluminum, and the first sub-portion and the base are integrally formed, to reduce processing difficulty.

In some embodiments, a material of the second sub-portion includes copper and a material of the current collector includes copper. This is conducive to enhancing the connection strength between the second sub-portion, the current collector, and the electrode tab, especially during the welding connection, and to enhancing the welding strength of the electrode tab, the current collector, and the second sub-portion. In this case, the material of the first sub-portion may be aluminum, without requiring the connection portion to be also made of copper, reducing the amount of copper used, thus lowering the weight and production cost of the electrode terminal.

In some embodiments, a size b of the second sub-portion in the thickness direction of the first wall satisfies b≥0.8 mm. This is conducive to improving the reliability of the welding connection between the second sub-portion and the protruding portion, thereby enhancing the connection strength between the connection portion and the protruding portion.

In some embodiments, the second sub-portion is disposed on a peripheral side of the first sub-portion and a side of the first sub-portion facing the protruding portion, the base includes a third sub-portion and a fourth sub-portion connected to each other, the fourth sub-portion surrounds the second sub-portion and is disposed on a side of the third sub-portion facing the first wall, and the sealing member abuts between the first wall and the fourth sub-portion; and the fourth sub-portion is connected to a peripheral surface of the second sub-portion. The interface between the second sub-portion and the first sub-portion is not exposed to the electrolyte, thus preventing corrosion at the interface surface between the second sub-portion and the first sub-portion. The interface between the fourth sub-portion and the third sub-portion is located on the side of the sealing interface, between the sealing member and the base, that is away from the electrolyte and is unlikely to come into contact with the electrolyte. That is, corrosion is unlikely to occur at the interface between the third sub-portion and the fourth sub-portion, further enhancing the stability of the electrode terminal structure.

In some embodiments, the second sub-portion and the fourth sub-portion are integrally formed. The composite interfaces of the second sub-portion and the fourth sub-portion with the first sub-portion and the third sub-portion, respectively, are located on the side of the sealing interface of the sealing member away from the electrolyte, that is, on the outer side of the sealing member. In other words, the composite interfaces of the materials of the second sub-portion and the fourth sub-portion with the first sub-portion and the third sub-portion are isolated from the electrolyte by the sealing member and are less prone to corrosion, which further improves the structural stability of the electrode terminal.

In some embodiments, the first sub-portion and the third sub-portion are integrally formed. The first sub-portion and the third sub-portion may be made of the same material and formed using a stamping process, simplifying the structure of the electrode terminal and improving the processing efficiency of the electrode terminal.

In some embodiments, in a direction perpendicular to the thickness direction of the first wall, the end surface of the fourth sub-portion is located at the side portion of the peripheral surface of the sealing member back away from the connection portion. Thus, the end surface of the fourth sub-portion is located on the outer side of the sealing interface of the sealing member, further reducing the possibility of the composite interface being corroded by the electrolyte.

According to a second aspect, an embodiment of this application provides a battery, including the battery cell according to any one of the embodiments of the first aspect.

As the battery provided in this embodiment of this application uses the battery cell provided in any one of the above embodiments, it has the same technical effects, which is not repeated herein.

According to a third aspect, an embodiment of this application provides an electric apparatus including the battery according to the embodiment of the second aspect, where the battery is configured to supply electric energy.

As the electric apparatus provided in this embodiment of this application uses the battery provided in the above embodiment of this application, it has the same technical effects, which is not repeated here.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to an embodiment of this application;
FIG. 2 is a schematic exploded view of a battery according to an embodiment of this application;
FIG. 3 is a schematic structural diagram of a battery module in the battery according to an embodiment of this application;
FIG. 4 is a schematic exploded view of a battery cell according to some embodiments of this application;
FIG. 5 is a front view of the battery cell with a partial structure omitted according to an embodiment of this application;
FIG. 6 is a schematic structural cross-sectional view along A-A of FIG. 5;
FIG. 7 is a locally enlarged view of position B in FIG. 6;
FIG. 8 is another locally enlarged view of position B in FIG. 6;
FIG. 9 is still another locally enlarged view of position B in FIG. 6;
FIG. 10 is yet another locally enlarged view of position B in FIG. 6;
FIG. 11 is still yet another locally enlarged view of position B in FIG. 6;

In the accompanying drawings, the figures are not necessarily drawn to scale.

Description of reference signs:
1. vehicle; 1a. motor; 1b. controller;
10. battery; 11. first box portion; 12. second box portion;
20. battery module;
30. battery cell; 31. housing; 31a. accommodating cavity; 311. shell; 311a. opening; 312. end cover; 313. first wall; 313a. first through hole; 32. electrode assembly; 321. electrode tab; 33. electrode terminal; 331. base; 3311. third sub-portion; 3312. fourth sub-portion; 332. connection portion; 332a. first connection surface; 3321. first sub-portion; 3322. second sub-portion; 34. current collector; 341. body portion; 342. protruding portion; 342a. second connection surface; 34b. groove; 35. sealing member; 36. insulating member; 36a. second through hole; and
X. thickness direction.

### DESCRIPTION OF EMBODIMENTS

The following further describes implementations of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first" and "second" are merely intended for a purpose of description and shall not be understood as an indication or implication of relative importance. "Perpendicular" is not perpendicular in the strict sense but within an allowable range of error. "Parallel" is not parallel in the strict sense but within an allowable range of error.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. It is explicitly or implicitly understood by persons skilled in the art that the embodiments described in this application may be combined with other embodiments.

In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charge or discharge of the battery cell.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied to a surface of the positive electrode current collector. The positive electrode current collector includes a positive electrode current collecting portion and a positive electrode protruding portion protruding from the positive electrode current collecting portion. The positive electrode current collecting portion is coated with the positive electrode active substance layer, at least part of the positive electrode protruding portion is uncoated with the positive electrode active substance layer, and the positive electrode protruding portion is used as a positive electrode tab. A lithium-ion battery is used as an example, for which, the positive electrode current collector may be made of aluminum, the positive electrode active substance layer includes a positive electrode active substance, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied to a surface of the negative electrode current collector. The negative electrode current collector includes a negative electrode current collecting portion and a negative electrode protruding portion protruding from the negative electrode current collecting portion. The negative electrode current collecting portion is coated with the negative electrode active substance layer, at least part of the negative electrode protruding portion is uncoated with the negative electrode active substance layer, and the negative electrode protruding portion is used as a negative electrode tab. The negative electrode current collector may be made of copper, the negative electrode active substance layer includes a negative electrode active substance, and the negative electrode active substance may be carbon, silicon, or the like. To allow a high current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like. In addition, the electrode assembly may be a wound structure or a laminated structure. However, the embodiments of this application are not limited thereto.

After found low safety performance of the battery cell, the inventors systematically analyzed and researched the structure and operation process of the battery cell. The results revealed that with the housing between the electrode terminal and the current collector in the battery cell, to connect the electrode terminal and the current collector, in the related art, the current collector is provided with a protruding portion extending towards the electrode terminal for connection therewith, thus achieving electrical connection between the electrode terminal and the current collector. However, the protruding portion is too high relative to the body portion, resulting in low structural strength of the protruding portion and low connection strength between the electrode terminal and the current collector. This is likely to cause a failure of electrical connection between the electrode terminal and the current collector, severely affecting the operational reliability and safety performance of the battery cell.

Based on the foregoing problems found by the inventors, the inventors have improved the structure of the battery cell. The technical solution described in the embodiments of this application is applicable to a battery cell, a battery containing such battery cell, and an electric apparatus using such battery.

A battery cell provided in the embodiments of this application includes a housing, an electrode terminal, and a current collector. The housing has a first wall and an accommodating cavity, where the first wall has a through hole enabling communication between the accommodating cavity and the outside of the housing. The electrode terminal includes a base and a connection portion connected to the base, where the base is located on a side of the first wall back away from the accommodating cavity, and at least part of the connection portion is located in the through hole. The current collector includes a body portion and a protruding portion connected to the body portion, where the protruding portion protrudes towards the first wall, and the protruding portion is configured to be connected to the connection portion.

According to the battery cell provided in the embodiments of this application, as at least part of the connection portion of the electrode terminal is located in the through hole, the height of the protruding portion of the current collector can be reduced effectively, helping to enhance the structural strength of the protruding portion, thus thereby enhancing the structural strength and connection reliability between the current collector and the electrode terminal. This helps to improve the safety performance of the battery cell.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description of the following embodiments, the electric apparatus being a vehicle is used as an example.

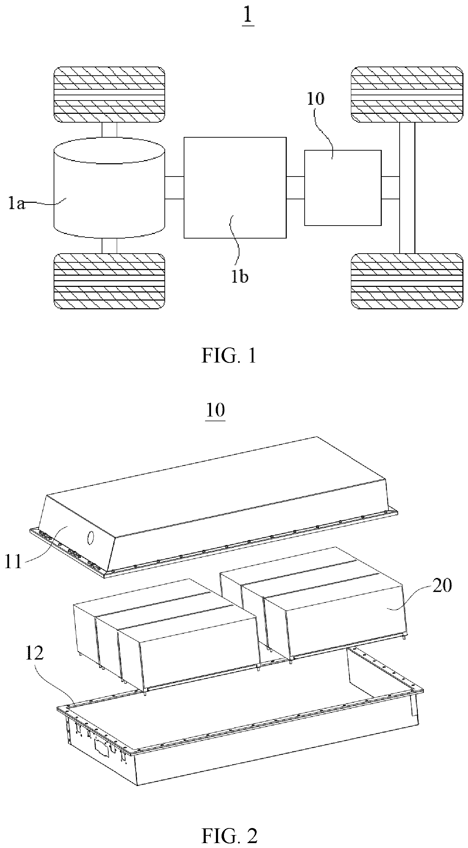

As shown in FIG. 1, a battery 10 is disposed in a vehicle 1. The battery 10 may be provided at the bottom, head, or tail of the vehicle 1. The battery 10 may be configured to supply power to the vehicle 1. For example, the battery 10 may be used as an operational power source for the vehicle 1.

The vehicle 1 further includes a controller 1b and a motor 1a. The controller 1b is configured to control the battery 10 to supply power to the motor 1a, for example, to satisfy power needs of start, navigation, and driving of the vehicle 1.

In some embodiments of this application, the battery 10 can be used as not only an operational power source for the vehicle 1 but also a traction power source for the vehicle 1, replacing or partially replacing fossil fuel or natural gas to provide driving traction for the vehicle 1.

Referring to FIG. 2, the battery 10 includes a battery cell (not shown in the FIG. 2). The battery 10 may further include a box accommodating the battery cell.

The box is configured to accommodate the battery cell, and the box may be of various structures. In some embodiments, the box may include a first box portion 11 and a second box portion 12. The first box portion 11 fits with the second box portion 12. The first box portion 11 and the second box portion 12 jointly define an accommodating space accommodating the battery cell. The second box portion 12 may be a hollow structure with one end open, the first box portion 11 is a plate-shaped structure, and the first box portion 11 covers the opening side of the second box portion 12 so as to form the box having the accommodating space. The first box portion 11 and the second box portion 12 may alternatively both be a hollow structure with an opening formed at an end. The opening side of the first box portion 11 covers the opening side of the second box portion 12 to form a box with an accommodating space. Certainly, the first box portion 11 and the second box portion 12 may be of various shapes, such as cylinder or cuboid.

To improve the air tightness after connection of the first box portion 11 and the second box portion 12, a sealing member, such as sealing gum and sealing ring, may further be disposed between the first box portion 11 and the second box portion 12.

Assuming that the first box portion 11 covers the second box portion 12, the first box portion 11 may also be referred to as an upper box cover, and the second box portion 12 may also be referred to as a lower box body.

There may be one or more battery cells in the battery 10. Under the condition that a plurality of battery cells are provided, the plurality of battery cells may be connected in series, parallel, or series-parallel. Being connected in series-parallel means a combination of series and parallel connections of the plurality of battery cells. The plurality of battery cells may be directly connected in series, parallel, or series-parallel, and then an entirety composed of the plurality of battery cells is accommodated in the box. Alternatively, a battery module 20 may be formed by a plurality of battery cells being connected in series, parallel, or series-parallel first. The plurality of battery modules 20 are then connected in series, parallel, or series-parallel to form an entirety which is accommodated in the box.

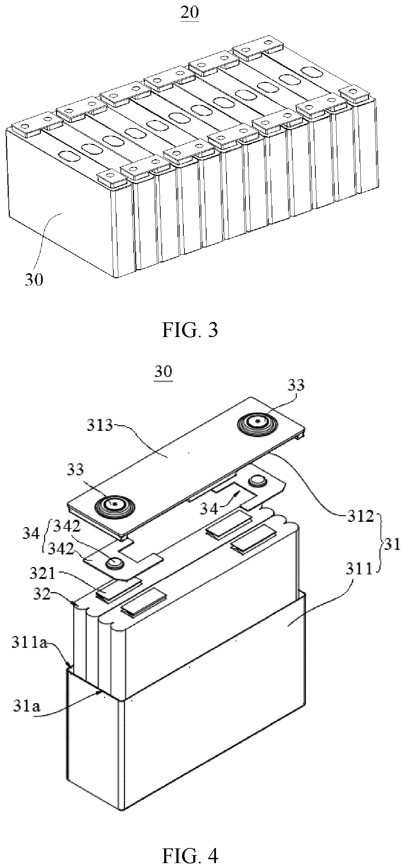

In some embodiments, referring to FIG. 3, FIG. 3 is a schematic structural diagram of the battery module 20 shown in FIG. 2. A plurality of battery cells 30 are in the battery module 20. The plurality of battery cells 30 are connected in series, parallel, or series-parallel to form the battery module 20. The plurality of battery modules 20 are then connected in series, parallel, or series-parallel to form an entirety which is accommodated in the box.

In some embodiments, the plurality of battery cells 30 in the battery module 20 may be electrically connected via a busbar, so that the plurality of battery cells 30 in the battery module 20 are connected in series, parallel, or series-parallel.

Referring to FIG. 4, FIG. 4 is a schematic exploded view of the battery cell 30 shown in FIG. 3. The battery cell 30 provided by the embodiments of this application includes an electrode assembly 32 and a housing 31, the housing 31 has an accommodating cavity, and the electrode assembly 32 is accommodated in the accommodating cavity.

In some embodiments, the housing 31 may include a shell 311 and an end cover 312. The shell 311 is a hollow structure with an opening on one side, and the end cover 312 covers the opening 311a of the shell 311 to form hermetical connection so as to form a sealed space for accommodating the electrode assembly 32 and the electrolyte.

During the assembly of the battery cell 30, the electrode assembly 32 may first be placed in the shell 311, the end cover 312 covers the opening of the shell 311, and then the electrolyte is injected into the shell 311 through the electrolyte injection opening on the end cover 312.

In some embodiments, the housing 31 may also be configured to accommodate an electrolyte such as a liquid electrolyte. The housing 31 may have various structure forms.

The shell 311 may be of a variety of shapes, for example, cylinder, cuboid, or the like. A shape of the shell 311 may be determined according to a specific shape of the electrode assembly 32. For example, if the electrode assembly 32 is of a cylinder structure, the shell 311 is optionally a cylinder structure. If the electrode assembly 32 is of a cuboid structure, the shell 311 is optionally a cuboid structure. In FIG. 4, for example, the shell 311 and the electrode assembly 32 are both of a cuboid structure.

The shell 311 may be made of various materials, such as copper, iron, aluminum, stainless steel, and aluminum alloy. This is not particularly limited in the embodiments of this application.

One or more electrode assemblies 32 may be accommodated in the shell 311. In FIG. 4, two electrode assemblies 32 may be accommodated in the shell 311.

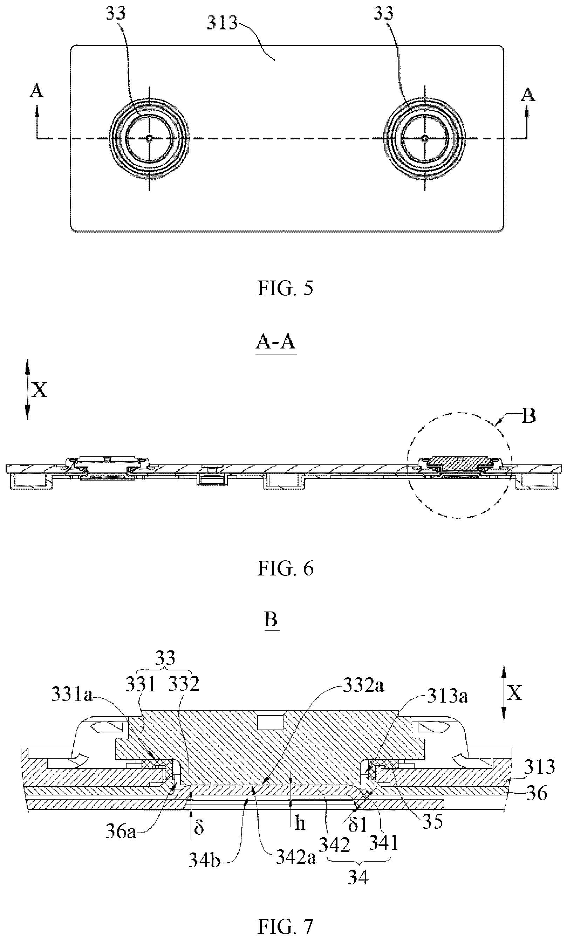

As shown in FIGs. 5, 6, and 7, the battery cell 10 provided in the embodiments of this application includes a housing 31, an electrode terminal 33, and a current collector 34. The housing 31 has a first wall 313 and an accommodating cavity 31a, and the first wall 313 has a first through hole 313a enabling communication between the accommodating cavity 31a and the outside of the housing 31. The electrode terminal 33 includes a base 331 and a connection portion 332 connected to the base 331, where the base 331 is located on a side of the first wall 313 back away from the accommodating cavity 31a, and at least part of the connection portion 332 is located in the first through hole 313a. The current collector 34 includes a body portion 341 and a protruding portion 342 connected to the body portion 341, where the protruding portion 342 protrudes towards the first wall 313, and the protruding portion 342 is configured to be connected to the connection portion 332.

The first wall 313 may be part of the shell 311 of the housing 31, or the first wall 313 may be part of the end cover 312 of the housing 31. The accommodating cavity 31a communicates with the outside of the housing 31 via the first through hole 313a, and the first through hole 313a penetrates the first wall 313 along the thickness direction X of the first wall 313.

Optionally, the first through hole 313a may be a straight bore, or, depending on the specific structure of the connection portion 332 that fits with the first through hole 313a and their positional relationship, the inner wall of the first through hole 313a is provided with a stepped surface.

Optionally, the first through hole 313a may be cylindrical, elliptical, prismatic, or of other irregular shapes.

The base 331 and the connection portion 332 of the electrode terminal 33 may be integrally processed into a whole, or the base 331 and the connection portion 332 may be separately processed and then connected together by welding, riveting, or other methods.

The connection portion 332 is located on the side of the base 331 facing the accommodating cavity 31a, and the base 331 may be connected to the outer wall of the first wall 313 on the side back away from the accommodating cavity 31a. The connection portion 332 may be entirely located in the first through hole 313a, or part of the connection portion 332 may be located in the first through hole 313a, with another part located on the side of the first through hole 313a back away from the accommodating cavity 31a. Certainly, part of the connection portion 332 may further be located in the accommodating cavity 31a.

The protruding portion 342 of the current collector 34 may be processed by stamping, or the protruding portion 342 of the current collector 34 may be processed by milling. The current collector 34 can achieve electrical connection with the electrode terminal 33 via the protruding portion 342, and connection with the electrode assembly 32 via the body portion 341. Thus, the electrode terminal 33 and the electrode assembly 32 may be electrically connected via the current collector 34.

Optionally, part of the protruding portion 342 may be located in the first through hole 313a, so that the protruding portion 342 and the connection portion 332 are connected in the first through hole 313a, or the protruding portion 342 is not located in the first through hole 313a, meaning the connection portion 332 passes through the first through hole 313a to be connected to the protruding portion 342. In some embodiments, the protruding portion 342 may be not located in the first through hole 313a, but the connection portion 332 passes through the first through hole 313a to be connected to the protruding portion 342 in the accommodating cavity 31a.

Optionally, the battery cell 10 may further include an insulating member 36, and the insulating member 36 is located on the side of the first wall 313 facing the accommodating cavity 31a. The insulating member 36 has a second through hole 36a, and the second through hole 36a corresponds to the first through hole 313a, enabling the connection portion 332 or the protruding portion 342 to pass through the second through hole 36a for mutual connection. The protruding portion 342 may partially extend into the second through hole 36a, or pass through the second through hole 36a to be connected to the connection portion 332 in the first through hole 313a. In other words, the connection surface between the protruding portion 342 and the connection portion 332 may be located in the first through hole 313a, or the connection surface between the protruding portion 342 and the connection portion 332 may be located in the second through hole 36a. Certainly, the connection portion 332 may pass through both the first through hole 313a and the second through hole 36a to be connected to the protruding portion 342 in the accommodating cavity 31a.

According to the battery cell 10 provided in the embodiments of this application, at least part of the connection portion 332 of the electrode terminal 33 is disposed in the first through hole 313a, which is conducive to reducing the protrusion height of the protruding portion 342 of the current collector 34 relative to the body portion 341, thereby enhancing the structural strength of the protruding portion 342 and the connection reliability between the protruding portion 342 and the electrode terminal 33. Therefore, the battery cell 10 provided by the embodiments of the application can improve the safety performance of the battery cell 10.

In addition, the protruding portion 342 of the current collector 34 is typically manufactured by stretching or stamping. When the protrusion height of the protruding portion 342 relative to the body portion 341 increases, the wall of the protruding portion 342 becomes thinner. When the wall of the protruding portion 342 is too thin, its strength decreases and it is possibly welded through or deforms during welding. According to the battery cell 10 provided in the embodiments of this application, at least part of the connection portion 332 of the electrode terminal 33 is disposed in the first through hole 313a. This is conducive to ensuring the wall thickness of the protruding portion 342, further enhancing the structural strength of the protruding portion 342 and increasing the welding success rate between the protruding portion 342 and the electrode terminal 33.

In some embodiments, the current collector 34 has a groove 34b on a side back away from the first wall 313, and in a thickness direction X of the first wall 313, the groove 34b corresponds to the protruding portion 342.

As the groove 34b corresponds to the protruding portion 342, the groove 34b may be naturally formed during the processing of the protruding portion 342, or the groove 34b and the protruding portion 342 may be separately processed.

For example, the blank of the current collector 34 may be sheet-like, and the protruding portion 342 may be processed by stamping. This is conducive to simplifying the processing technology of the current collector 34. In the embodiment where the protruding portion 342 is welded to the connection portion 332, the groove 34b is provided at the position corresponding to the protruding portion 342 in the thickness direction X, and at the groove 34b, the protruding portion 342 and the connection portion 332 are welded through for connection. Therefore, the current collector 34 is provided with the groove 34b corresponding to the protruding portion 342, which is conducive to improving the convenience of the welding process between the protruding portion 342 and the connection portion 332.

As shown in FIG. 7, in some embodiments, a minimum wall thickness of the protruding portion 342 is δ1, a wall thickness of the body portion 341 is δ, and 0.8≤δ1/δ<1.

For example, δ1/δ may be 0.8, 0.85, 0.9, 0.95, or the like.

The blank of the current collector 34 may have a sheet-like structure with uniform thickness, and the protruding portion 342 is formed by stamping. As the protruding portion 342 is higher relative to the body portion 341, its wall is thinner, which is less conducive to ensuring the structural strength of the protruding portion 342. The wall thickness of the protruding portion 342 is the wall thickness after the protruding portion 342 is stretched, while the wall thickness δ of the body portion 341 may be the wall thickness of the protruding portion 342 before stamping. The protruding portion 342 has a top wall and side walls surrounding the periphery of the top wall. During the stamping process, the wall thickness of the side wall is less than the wall thickness of the top wall. After the protruding portion 342 is connected to the connection portion 332, the structural strength of the side wall has a significant effect on the connection strength between the protruding portion 342 and the connection portion 332. Therefore, the minimum wall thickness of the protruding portion 342 may be the wall thickness of the side wall. After in-depth research and extensive experiments, the inventors found that setting 0.8≤δ1/δ<1, that is, setting the ratio of the thickness of the protruding portion 342 before stamping to the thickness after stamping to be greater than or equal to 0.8, is conducive to ensuring the structural strength of the protruding portion 342, thereby enhancing the connection strength and reliability between the protruding portion 342 and the connection portion 332.

As shown in FIG. 7, in some embodiments, the protruding portion 342 protrudes from the body portion 341 by a height h satisfying 0<h≤3 mm.

The height h of the protruding portion 342 protruding from the body portion 341 may be the distance between the surface of the side of the protruding portion 342 connected to the connection portion 332 and the surface of the body portion 341 facing the first wall 313.

For example, the height h of the protruding portion 342 protruding from the body portion 341 may be 0.5 mm, 1 mm, 1.5 mm, 2 mm, 2.5 mm, or 3 mm,

In the embodiments where the protruding portion 342 is formed by the stamping process, the larger the height of the protruding portion 342 protruding from the body portion 341, the smaller the corresponding wall thickness δ1 of the protruding portion 342. After in-depth research and extensive experiments, the inventors found that setting h≤3 mm is conducive to ensuring that the ratio of the wall thickness δ1 of the protruding portion 342 to the thickness δ of the body portion 341 satisfies 0.8≤δ1/δ<1, that is, the ratio of the thickness of the protruding portion 342 before stretch to the thickness after stretch is greater than or equal to 0.8. This is conducive to ensuring the structural strength of the protruding portion 342, thereby enhancing the connection strength and reliability between the protruding portion 342 and the connection portion 332.

In some embodiments, the battery cell 10 further includes an insulating member 36, the insulating member 36 is disposed on the side of the first wall 313 facing the accommodating cavity 31a, the insulating member 36 has a second through hole 36a, and in the thickness direction X of the first wall 313, the second through hole 36a is opposite the first through hole 313a. The connection portion 332 has a first connection surface 332a facing the accommodating cavity 31a, the protruding portion 342 has a second connection surface 342a, and the first connection surface 332a abuts against the second connection surface 342a. The first connection surface 332a and the second connection surface 342a are located in the first through hole 313a, and/or the first connection surface 332a and the second connection surface 342a are located in the second through hole 36a.

The insulating member 36 can be used to insulate the first wall 313 from the electrode assembly 32 in the accommodating cavity 31a. The insulating member 36 may be sheet-like, or part of the insulating member 36 extends into the second through hole 36a. Optionally, part of the insulating member 36 may also extend into the first through hole 313a to form a stepped surface in the first through hole 313a or the second through hole 36a.

In the thickness direction X of the first wall 313, the second through hole 36a is opposite the first through hole 313a. In the direction perpendicular to the thickness direction X, the size of the first through hole 313a may be greater than, less than, or equal to the size of the second through hole 36a. The second through hole 36a and the first through hole 313a may both be cylindrical, or respectively be of other shapes. The central axes of the first through hole 313a and the second through hole 36a may coincide, or offset from each other by a certain distance.

The first connection surface 332a and the second connection surface 342a are the surfaces where the connection portion 332 and the protruding portion 342 are connected to each other. The first connection surface 332a may be flat, stepped, curved, or the like, and the second connection surface 342a has a shape that matches the first connection surface 332a.

In the embodiments where the first connection surface 332a and the second connection surface 342a are located in the first through hole 313a, the protruding portion 342 passes through the second through hole 36a to be connected to the connection portion 332 in the first through hole 313a. Alternatively, the connection portion 332 passes through the first through hole 313a, the protruding portion 342 passes through the second through hole 36a, and the connection portion 332 and the protruding portion 342 are connected at the interface surface between the first through hole 313a and the second through hole 36a.

In the embodiments where the first connection surface 332a and the second connection surface 342a are located in the second through hole 36a, the connection portion 332 passes through the first through hole 313a to be connected to the protruding portion 342 in the second through hole 36a. Part of the protruding portion 342 is located in the second through hole 36a.

In the embodiments where the first connection surface 332a and the second connection surface 342a have portions located in both the first through hole 313a and the second through hole 36a, the first connection surface 332a and the second connection surface 342a are stepped or curved surfaces. Part of the protruding portion 342 passes through the second through hole 36a to be connected to the connection portion 332 in the first through hole 313a, while another part does not pass through the second through hole 36a, but is connected to the connection portion 332 in the second through hole 36a.

When the first connection surface 332a abuts against the second connection surface 342a, the first connection surface 332a and the second connection surface 342a can be just in contact with each other, or they can be connected into a whole by welding, riveting, or the like.

Therefore, as the first connection surface 332a and the second connection surface 342a are in the first through hole 313a, or the first connection surface 332a and the second connection surface 342a are in the second through hole 36a, at least part of the protruding portion 342 can be located in the second through hole 36a. The second through hole 36a can provide a certain limiting function for the protruding portion 342. When part of the protruding portion 342 is located in the first through hole 313a, the first through hole 313a and the second through hole 36a jointly provide a limiting function for the protruding portion 342, limiting the displacement of the protruding portion 342 relative to the insulating member 36 and the first wall 313 in a direction perpendicular to the thickness direction X. This, in embodiments where the protruding portion 342 is welded to the connection portion 332, more facilitates connection between the protruding portion 342 and the connection portion 332.

In some embodiments, in a direction perpendicular to the thickness direction X, a size of the first connection surface 332a is greater than a size of the second connection surface 342a.

In other words, in any direction perpendicular to the thickness direction X, the size of the first connection surface 332a is greater than the size of the second connection surface 342a. Thus, the first connection surface 332a covers the second connection surface 342a in the thickness direction X. For example, the first connection surface 332a and the second connection surface 342a may be circular, and the diameter of the first connection surface 332a is greater than the diameter of the second connection surface 342a.

This facilitates the connection between the protruding portion 342 and the connection portion 332. In a case that on the side of the protruding portion 342 back away from the connection portion 332, the protruding portion 342 is welded to the connection portion 332, the connection portion 332 can provide good support for the protruding portion 342, facilitating the smooth progress of the welding process. The first connection surface 332a being larger than the second connection surface 342a is conducive to increasing the connection area between the first connection surface 332a and the second connection surface 342a, thereby improving the current-carrying capacity of the current collector 34 and the electrode terminal 33.

The body portion 341 and the first wall 313 may be directly connected, or connected via an intermediate connecting member, which may be specifically selected according to actual needs and is not limited thereto.

In some embodiments, the battery cell 10 further includes a sealing member 35, the sealing member 35 surrounds the connection portion 332, and in the thickness direction X of the first wall 313, the sealing member 35 abuts between the base 331 and first wall 313.

The first wall 313 on the side close to the sealing member 35 may have a flat surface, or a groove 34b may be provided on the side of the first wall 313 close to the sealing member 35. The first through hole 313a penetrates part of the bottom of the groove 34b, and the sealing member 35 abuts against the bottom of the groove 34b.

The sealing member 35 surrounds the periphery of the connection portion 332 and the first through hole 313a to reduce the risk of electrolyte in the accommodating cavity 31a overflowing to the outside of the battery cell 10 via the first through hole 313a.

The sealing member 35 may be in the shape of a flat sheet, in which case, the sealing member 35 completely abuts between the first wall 313 and the body portion 341. Alternatively, the sealing member 35 has a protrusion, the protrusion extends into the first through hole 313a to abut against the stepped surface of the insulating member 36 extending into the second through hole 36a, thus further improving the sealing performance of the sealing member 35.

Therefore, the arrangement of the sealing member 35 is conducive to improving the sealing performance of the accommodating cavity 31a of the battery cell 10 and reducing the risk of electrolyte leakage affecting the normal operation of the battery cell 10, thereby further improving the safety performance of the battery cell 10.

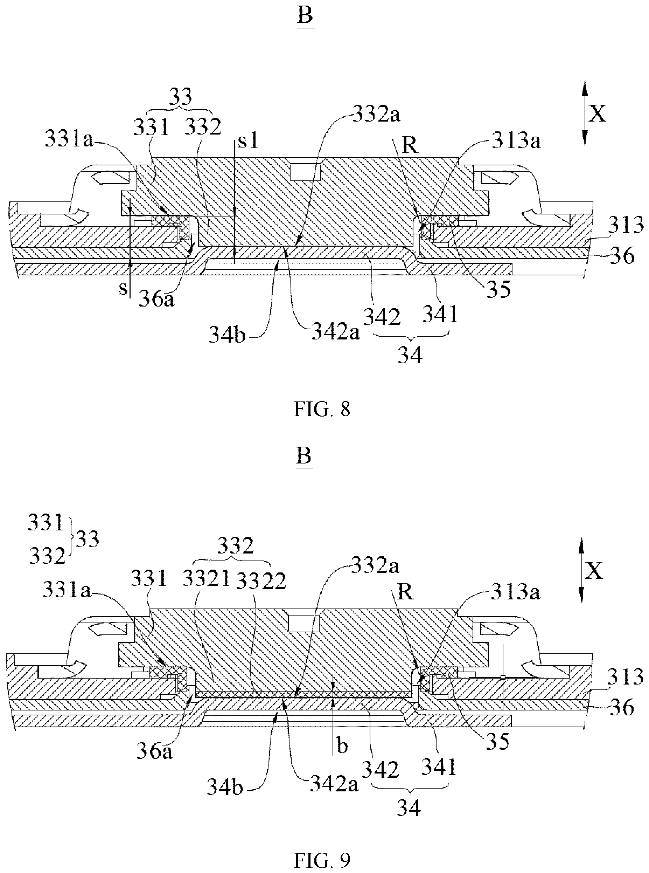

As shown in FIGs. 5, 6, and 8, in some embodiments, the base 331 has an abutment surface abutting against the sealing member 35, a distance between the abutment surface and the first connection surface 332a is s1, a distance between the abutment surface and a side of the insulating member 36 facing the accommodating cavity 31a is s, and s1/s≤0.7.

The distance from the abutment surface to the side of the insulating member 36 facing the accommodating cavity 31a is the distance from the abutment surface to part of the insulating member 36 facing a side of the accommodating cavity 31a and surrounding the periphery of the second through hole 36a. It may be understood that a side surface of the insulating member 36 facing the accommodating cavity 31a may be flat or stepped, where the side of the insulating member 36 facing the accommodating cavity 31a is the surface of the insulating member 36 located near and penetrated by the second through hole 36a. Therefore, the distance s is the sum of the dimensions in the thickness direction X of the parts of the first through hole 313a, the second through hole 36a, and the sealing member 35 compressed and located between the base 331 and the first wall 313.

The larger the part of the connection portion 332 extending into the first through hole 313a and the second through hole 36a, the smaller the part of the protruding portion 342 extending into the first through hole 313a or the second through hole 36a. Conversely, the smaller the part of the connection portion 332 extending into the first through hole 313a or the second through hole 36a, the larger the part of the protruding portion 342 extending into the first through hole 313a or the first through hole 313a. The larger size of the part of the protruding portion 342 extending into the first through hole 313a or the second through hole 36a is more conducive to positioning the protruding portion 342.

After extensive research and numerous experiments, the inventors found that setting s1/s≤0.7 is conducive to ensuring that the size of the part of the protruding portion 342 extending into the first through hole 313a or the second through hole 36a is sufficient to position the protruding portion 342, further improving the stability and convenience of the connection between the protruding portion 342 and the connection portion 332.

In some embodiments, a peripheral surface of the connection portion 332 is connected to a surface of the base 331 facing the first wall 313 via a curved surface.

Optionally, the curved surface may be a circular curved surface, an elliptical curved surface, or another irregular curved surface. A peripheral surface of the connection portion 332 is connected to a surface of the base 331 facing the first wall 313 via a curved surface. That is, the two are transitionally connected via the curved surface.

During the processing of the connection portion 332 and the base 331, the connection portion 332 may be formed through a stamping process. During the stamping process, the peripheral surface of the connection portion 332 is connected to the surface of the base 331 facing the first wall 313 via a curved surface. This, during the stamping process, is conducive to reducing the risk of metal wires forming at the intersection of the peripheral surface of the connection portion 332 and the surface of the base 331 facing the first wall 313, thus increasing the yield rate of the finished electrode terminal 33.

In some embodiments, a curvature radius R of the curved surface satisfies R≥0.5 mm.

This setting is conducive to further improving the smoothness of the transition at the connection between the peripheral surface of the connection portion 332 and the surface of the base 331 facing the first wall 313, reducing the risk of metal wires forming during the stamping process of the connection portion 332, and further increasing the yield rate of the finished electrode terminal 33.

In some embodiments, in the direction perpendicular to the thickness direction X of the first wall 313, a gap is present between the sealing member 35 and the connection portion 332, and in the thickness direction X of the first wall 313, a projection of the curved surface does not overlap a projection of the sealing member 35.

As the gap is present between the sealing member 35 and the connection portion 332, the sealing member 35 may be staggered with the curved surface. In the thickness direction X, the projections of the arc-shaped surface and the sealing member 35 do not overlap, and are staggered. Thus, when the electrode terminal 33 is sealingly connected to the sealing member 35, the curved surface does not press against the sealing member 35, such that the sealing member 35 is in planar contact with the abutment surface and the sealing member 35 bears force in the consistent direction, reducing the risk that the sealing member 35 lifts when fitting with the curved surface, leading to a too small effective sealing area and sealing failure. As shown in FIGs. 5. 6, and 9, in some embodiments, the connection portion 332 includes a first sub-portion 3321 and a second sub-portion 3322 connected to each other, the second sub-portion 3322 is located on a side of the first sub-portion 3321 facing the accommodating cavity 31a, the first sub-portion 3321 is connected to the base 331, and the second sub-portion 3322 is connected to the protruding portion 342.

The first sub-portion 3321 and the second sub-portion 3322 may be made of the same material, or the first sub-portion 3321 and the second sub-portion 3322 may be respectively processed from different materials. Specific settings may be made based on actual situations, and are not limited herein.

As the first sub-portion 3321 is connected to the base 331, the first sub-portion 3321 and the base 331 may be integrally processed into a whole, or separately processed and then connected together.

The second sub-portion 3322 is connected to the protruding portion 342, which is part of the current collector 34. The body portion 341 of the current collector 34 is connected to the electrode tab 321 of the electrode assembly 32. The specific materials for the current collector 34 and the second sub-portion 3322 may be arranged based on the material of the electrode tab 321. For example, in a case that the electrode tab 321 is made of aluminum, the materials of the current collector 34 and the second sub-portion 3322 include aluminum. In a case that the material of the electrode tab 321 includes copper, the materials of the second sub-portion 3322 and the current collector 34 may include copper, while the material of the first sub-portion 3321 does not have to be copper.

Therefore, as the connection portion 332 includes the first sub-portion 3321 and the second sub-portion 3322 connected to each other, based on actual situation, under the premise of connecting related structures, the specific materials of the first sub-portion 3321 and the second sub-portion 3322 are arranged reasonably, to reduce production costs and improve the connection reliability of the related structures.

In some embodiments, a material of the first sub-portion 3321 includes aluminum.

Because aluminum is lightweight and has a lower price, the material of the first sub-portion 3321 including aluminum is conducive to reducing the weight and production cost of the electrode terminal 33. The material of the base 331 may include aluminum, and the first sub-portion 3321 and the base 331 are integrally formed, to reduce processing difficulty.

Because the material of the electrode tab 321 of the electrode assembly 32 may include copper or aluminum, in the embodiment where the material of the electrode tab 321 includes aluminum, the materials of the current collector 34 and the second sub-portion 3322 may both be aluminum to enhance the connection strength between the electrode tab 321, the current collector 34, and the second sub-portion 3322.

In some embodiments, the material of the second sub-portion 3322 includes copper, and the material of the current collector 34 includes copper.

In the embodiment where the material of the electrode tab 321 includes copper, the materials of the second sub-portion 3322 and the current collector 34 both including copper are conducive to enhancing the connection strength between the second sub-portion 3322, the current collector 34, and the electrode tab 321, especially during the welding connection, and to enhancing the welding strength of the electrode tab 321, the current collector 34, and the second sub-portion 3322. In this case, the material of the first sub-portion 3321 may be aluminum, without requiring the connection portion 332 to be also made of copper, reducing the amount of copper used, thus lowering the weight and production cost of the electrode terminal 33.

In some embodiments, a size b of the second sub-portion 3322 in the thickness direction X of the first wall 313 satisfies b≥0.8 mm.

The materials of the second sub-portion 3322 and the protruding portion 342 both include copper. After extensive research and numerous experiments, the inventors have discovered that when the second sub-portion 3322 and the protruding portion 342 are welded together, setting the size b of the second sub-portion 3322 in the thickness direction X to satisfy the above relationship is conducive to improving the reliability of the welding connection between the second sub-portion 3322 and the protruding portion 342, thus enhancing the connection strength between the connection portion 332 and the protruding portion 342.

In some embodiments, as shown in FIGs. 5, 6, and 10, the second sub-portion 3322 is disposed on a peripheral side of the first sub-portion 3321 and a side of the first sub-portion 3321 facing the protruding portion 342. The base 331 includes a third sub-portion 3311 and a fourth sub-portion 3312 connected to each other, the fourth sub-portion 3312 surrounds the second sub-portion 3322 and is disposed on a side of the third sub-portion 3311 facing the first wall 313, and the sealing member 35 abuts between the first wall 313 and the fourth sub-portion 3312. The fourth sub-portion 3312 is connected to a peripheral surface of the second sub-portion 3322.

The third sub-portion 3311 and the fourth sub-portion 3312 may be formed separately or integrally.

As the second sub-portion 3322 is disposed on the peripheral side of the first sub-portion 3321 and on the side of the first sub-portion 3321 facing the protruding portion 342, the second sub-portion 3322 covers the first sub-portion 3321, with no part of the first sub-portion 3321 exposed to the outside, thereby avoiding contact with the electrolyte in the battery cell 10 and reducing the risk of electrolyte corroding to the first sub-portion 3321.

As the fourth sub-portion 3312 is connected to the peripheral surface of the second sub-portion 3322, the fourth sub-portion 3312 and the second sub-portion 3322 may be separately processed and then connected together by welding, riveting, or other methods, or the fourth sub-portion 3312 and the second sub-portion 3322 may be integrally processed into a whole, with the specific processing method selected based on the actual requirements.

As the fourth sub-portion 3312 is located on the peripheral surface of the second sub-portion 3322, the interface between the second sub-portion 3322 and the first sub-portion 3321 is not exposed to the electrolyte, thus preventing corrosion at the interface surface between the second sub-portion 3322 and the first sub-portion 3321. The cross-section of the fourth sub-portion 3312 and the third sub-portion 3311 is situated on the outer side of the sealing member 35 and is unlikely to come into contact with the electrolyte, such that corrosion is unlikely to occur at the interface between the third sub-portion 3311 and the fourth sub-portion 3312.

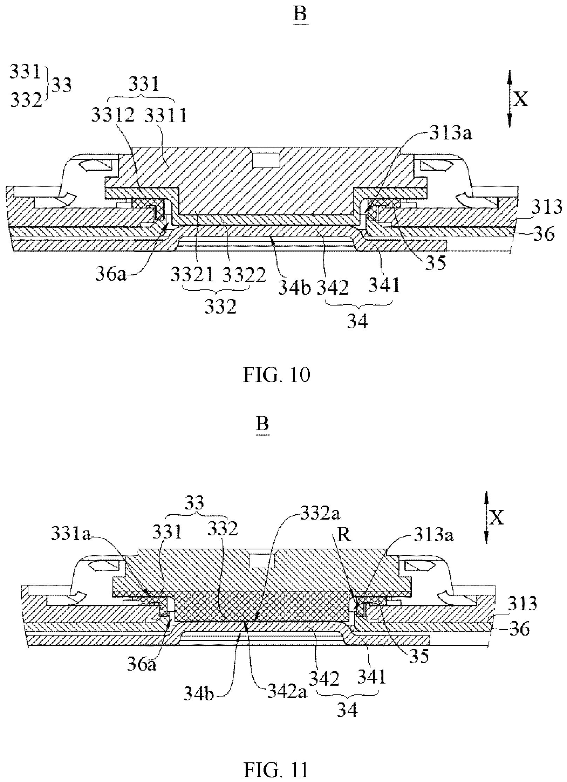

Optionally, as shown in FIG. 10, the second sub-portion 3322, the first sub-portion 3321, and the third sub-portion 3311 may be integrally processed into a whole, which also reduces the possibility of the electrolyte corroding the connection interface of different materials.

As shown in FIG. 10, in some embodiments, the second sub-portion 3322 and the fourth sub-portion 3312 are integrally formed.

As the second sub-portion 3322 and the fourth sub-portion 3312 are integrally formed, their blanks can be configured as flat plates, and the second sub-portion 3322 and the fourth sub-portion 3312 may be integrally formed through stamping or other processes. Therefore, the materials of the second sub-portion 3322 and the fourth sub-portion 3312 may be the same. As the sealing member 35 abuts between the fourth sub-portion 3312 and the first wall 313, the composite interfaces of the second sub-portion 3322 and the fourth sub-portion 3312 with the first sub-portion 3321 and the third sub-portion 3311, respectively, are located on the side of the sealing member 35 away from the electrolyte, that is, on the outer side of the sealing interface of the sealing member 35. In other words, the composite interfaces of the materials of the second sub-portion 3322 and the fourth sub-portion 3312 with the first sub-portion 3321 and the third sub-portion 3311 are isolated from the electrolyte by the sealing member 35 and are less prone to corrosion, which further improves the structural stability of the electrode terminal 33.

In some embodiments, the first sub-portion 3321 and the third sub-portion 3311 are integrally formed.

Therefore, the first sub-portion 3321 and the third sub-portion 3311 may be made of the same material and formed using a stamping process, simplifying the structure of the electrode terminal 33 and improving the processing efficiency of the electrode terminal 33.

In some embodiments, in a direction perpendicular to the thickness direction X of the first wall 313, the end surface of the fourth sub-portion 3312 is located at the side portion of the peripheral surface of the sealing member 35 back away from the connection portion 332.

In other words, the fourth sub-portion 3312 extends in a direction perpendicular to the thickness direction X and beyond the peripheral surface of the sealing member 35. Thus, the end surface of the fourth sub-portion 3312 is located on the outer side of the sealing interface of the sealing member 35, further reducing the possibility of electrolyte corroding the composite interface between the fourth sub-portion 3312 and the third sub-portion 3311.

In some embodiments, as shown in FIGs. 5, 6, and 11, the connection portion 332 may be integrally formed and made of copper. For example, the material of the connection portion 332 is aluminum, which is conducive to enhancing the workability and processing efficiency of the connection portion 332.

In some embodiments, the battery cell 10 includes an electrode terminal 33, a housing 31, a current collector 34, an insulating member 36, and a sealing member 35. The housing 31 has a first wall 313 and an accommodating cavity 31a, where the first wall 313 has a first through hole 313a enabling communication between the accommodating cavity 31a and the outside of the housing 31. The electrode terminal 33 includes a base 331 and a connection portion 332 connected to the base 331, and at least part of the connection portion 332 is located in the first through hole 313a. The insulating member 36 is disposed on the side of the first wall 313 facing the accommodating cavity 31a. The insulating member 36 has a second through hole 36a, the second through hole 36a and the first through hole 313a are cylindrical, and the axes of the second through hole 36a and the first through hole 313a coincide. The insulating member 36 has a portion that extends into the second through hole 36a and the first through hole 313a, forming a stepped surface in the first through hole 36a or the second through hole 36a. The sealing member 35 is annular and has a protrusion that extends into the first through hole 313a. Part of the sealing member 35 is clamped between the base 331 of the electrode terminal 33 and the first wall 313. The protrusion of the sealing member 35 extends into the first through hole 313a and abuts against the stepped surface of the insulating member 36 located in the first through hole 36a or the second through hole 36a. The current collector 34 includes a body portion 341 and a protruding portion 342 connected to the body portion 341. The protruding portion 342 is formed by a stamping process and protrudes from the body portion 341 by a height h satisfying 0<h≤3 mm, such that the relationship between the wall thickness δ1 of the protruding portion 342 and the wall thickness δ of the body portion 341 satisfies 0.8≤δ1/δ<1. The connection surface between the connection portion 332 of the electrode terminal 33 and the protruding portion 342 of the current collector 34 is located in the first through hole 313a or the second through hole 36a, that is, at least part of the protruding portion 342 is located in the second through hole 36a to provide a limiting function during the connection process between the protruding portion 342 and the connection portion 332. The connection portion 332 includes a first sub-portion 3321 and a second sub-portion 3322, the second sub-portion 3322 is located on a side of the first sub-portion 3321 facing the accommodating cavity 31a, the first sub-portion 3321 is connected to the base 331, and the second sub-portion 3322 is connected to the protruding portion 342. The base 331 includes a third sub-portion 3311 and a fourth sub-portion 3312 connected to each other, the fourth sub-portion 3312 surrounds the second sub-portion 3322 and is disposed on a side of the third sub-portion 3311 facing the first wall 313, and at least part of the sealing member 35 abuts between the first wall 313 and the fourth sub-portion 3312. The first sub-portion 3321 and the third sub-portion 3311 are integrally formed, and the second sub-portion 3322 and the fourth sub-portion 3312 are also integrally formed, both through a stamping process. The materials of the first sub-portion 3321 and the third sub-portion 3311 include aluminum. The materials of the second sub-portion 3322, the fourth sub-portion 3312, and the protruding portion 342 include copper. This reduces the manufacturing difficulty of the electrode terminal 33, decreases the amount of copper used in the electrode terminal 33, and ensures the connection reliability between structures such as the electrode terminal 33 and the protruding portion 342.

According to the battery cell 10 provided in the embodiments of this application, at least part of the connection portion 332 of the electrode terminal 33 is located in the first through hole 313a, and the protruding portion 342 extends into the second through hole 36a. This is conducive to reducing the size of the protruding portion 342 extending into the second through hole 36a, improving the structural strength of the protruding portion 342 and enhancing the operational reliability of the current collector 34, thus improving the safety performance of the battery cell 10. Additionally, as shown in FIG. 10, the composite interface of copper and aluminum is located on the side of the composite interface of the sealing member 35 with the first wall 313 and the base 331 that is back away from the electrolyte, that is, the composite interface of copper and aluminum is isolated from the electrolyte in the battery cell by the sealing interface formed by the sealing member 35. This is conducive to reducing the corrosion of copper and aluminum by the electrolyte, thereby improving the structural stability of the electrode terminal 33.

The battery 10 according to the embodiments of this application includes the battery cell 10 provided in any one of the foregoing embodiments.

As the battery 10 provided in the embodiments of this application uses the battery cell 10 provided in any one of the foregoing embodiments, it has the same technical effects, which is not repeated herein.

An electric apparatus provided according to an embodiment of this application includes the battery 10 provided in the foregoing embodiment, where the battery 10 is configured to supply electric energy.

As the electric apparatus provided in this embodiment of this application uses the battery 10 provided in the above embodiments of this application, it has the same technical effects, which is not repeated here.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising:
a housing having a first wall and an accommodating cavity, wherein the first wall has a first through hole enabling communication between the accommodating cavity and the outside of the housing;
an electrode terminal comprising a base and a connection portion connected to the base, wherein the base is located on a side of the first wall back away from the accommodating cavity, and at least part of the connection portion is located in the first through hole; and
a current collector comprising a body portion and a protruding portion connected to the body portion, wherein the protruding portion protrudes towards the first wall, and the protruding portion is configured to be connected to the connection portion.

2. The battery cell according to claim 1, wherein the current collector has a groove on a side back away from the first wall, and in a thickness direction of the first wall, the groove corresponds to the protruding portion.

3. The battery cell according to claim 2, wherein a minimum wall thickness of the protruding portion is δ1, a wall thickness of the body portion is δ, and 0.8≤δ1/δ<1.

4. The battery cell according to any one of claims 1 to 3, wherein the protruding portion protrudes from the body portion by a height h satisfying 0<h≤3 mm.

5. The battery cell according to any one of claims 1 to 4, wherein the battery cell further comprises an insulating member, the insulating member is disposed on a side of the first wall facing the accommodating cavity, the insulating member has a second through hole, and in the thickness direction of the first wall, the second through hole is opposite the first through hole; and
the connection portion has a first connection surface facing the accommodating cavity, the protruding portion has a second connection surface, the first connection surface abuts against the second connection surface, the first connection surface and the second connection surface are located in the first through hole, and/or the first connection surface and the second connection surface are located in the second through hole.

6. The battery cell according to claim 5, wherein in a direction perpendicular to the thickness direction, a size of the first connection surface is greater than a size of the second connection surface.

7. The battery cell according to claim 5 or 6, wherein the battery cell further comprises a sealing member, the sealing member surrounds the connection portion, and in the thickness direction of the first wall, the sealing member at least partially abuts between the base and first wall.

8. The battery cell according to claim 7, wherein the base has an abutment surface abutting against the sealing member, a distance between the abutment surface and the first connection surface is s1, a distance between the abutment surface and a side of the insulating member facing the accommodating cavity is s, and s1/s≤0.7.

9. The battery cell according to claim 7 or 8, wherein a peripheral surface of the connection portion is connected to a surface of the base facing the first wall via a curved surface.

10. The battery cell according to claim 9, wherein a curvature radius R of the curved surface satisfies R≥0.5 mm.

11. The battery cell according to claim 9 or 10, wherein in the direction perpendicular to the thickness direction of the first wall, a gap is present between the sealing member and the connection portion, and in the thickness direction of the first wall, a projection of the curved surface does not overlap a projection of the sealing member.

12. The battery cell according to any one of claims 7 to 11, wherein the connection portion comprises a first sub-portion and a second sub-portion connected to each other, the second sub-portion is located on a side of the first sub-portion facing the accommodating cavity, the first sub-portion is connected to the base, and the second sub-portion is connected to the protruding portion.

13. The battery cell according to claim 12, wherein a material of the first sub-portion comprises aluminum.

14. The battery cell according to claim 12 or 13, wherein a material of the second sub-portion comprises copper, and a material of the current collector comprises copper.

15. The battery cell according to claim 14, wherein a size b of the second sub-portion in the thickness direction of the first wall satisfies b≥0.8 mm.

16. The battery cell according to any one of claims 12 to 15, wherein the second sub-portion is disposed on a peripheral side of the first sub-portion and a side of the first sub-portion facing the protruding portion, the base comprises a third sub-portion and a fourth sub-portion connected to each other, the fourth sub-portion surrounds the second sub-portion and is disposed on a side of the third sub-portion facing the first wall, and the sealing member abuts between the first wall and the fourth sub-portion; and
the fourth sub-portion is connected to a peripheral surface of the second sub-portion.

17. The battery cell according to claim 16, wherein the second sub-portion and the fourth sub-portion are integrally formed; and/or
the first sub-portion and the third sub-portion are integrally formed.

18. The battery cell according to claim 16 or 17, wherein in the direction perpendicular to the thickness direction of the first wall, an end portion of the fourth sub-portion is located at a side portion of a peripheral surface of the sealing member back away from the connection portion.

19. A battery, comprising the battery cell according to any one of claims 1 to 18.

20. An electric apparatus, comprising the battery according to claim 19, wherein the battery is configured to supply electric energy.
